# EUROPÄISCHE PATENTSCHRIFT

(11) **EP 0 360 000 B1**
(45) Veröffentlichungstag und Bekanntmachung des Hinweises auf die Patenterteilung: **08.11.1995**
(21) Anmeldenummer: 89115169.8
(22) Anmeldetag: 16.08.1989
(51) Int. Cl.: B60T 8/00, B60T 8/42, B60T 8/48

(54) **Verfahren und Vorrichtung zur Anfahrschlupfregelung (ASR)**
Method and device for controlling skidding when starting
Procédé et installation destinés à la régulation de dérapage pendant le démarrage

(30) Priorität: 21.09.1988 DE 3832025
(43) Veröffentlichungstag der Anmeldung: 28.03.1990
(73) Patentinhaber: ROBERT BOSCH GMBH, 70442 Stuttgart (DE)
(72) Erfinder: Jonner, Wolf-Dieter, Dipl.-Ing.(FH), D-7141 Beilstein-Schmidhausen (DE)

(56) Entgegenhaltungen:
- DE-A- 3 507 330
- GB-A- 2 119 883
- PATENT ABSTRACTS OF JAPAN vol. 12, no. 464 (M-771)6. Dezember 1988 & JP-A-63 188 556 ( FUJI HEAVY IND ) 4. August 1988

## Beschreibung

### Stand der Technik

Die Erfindung betrifft ein Verfahren zur Anfahrschlupfregelung (ASR) bzw. zur (Berg)Anfahrhilfe nach dem Oberbegriff des Anspruchs 1 bzw. eine Vorrichtung nach dem Oberbegriff des Anspruchs 4.

Die gleichzeitige Ausnutzung von in einer Bremsanlage für Kraftfahrzeuge vorgesehenen ABS-Komponenten (Antiblockiersystem) für eine Antriebsschlupfregelung oder im Sinne einer Anfahrhilfe am Berg oder auf glattem Untergrund ist bekannt (GB-PS 2 119 883), wobei bevorzugt auf eine spezielle Ausbildung eines Antiblockiersystems zurückgegriffen wird, nämlich des sogenannten ABS 2 Typs. Bei einem solchen bekannten Antiblockiersystem sind Druckmittelspeicher in Verbindung mit einer Rückförderpumpe vorgesehen, wobei die Druckmittelspeicher in der ABS-Teilfunktion der "Druckreduzierung" durch die dann entsprechend geschalteten ABS-Regelventile, meistens in einer 3/3-Wegeausführung, Druckmittel aus den Radbremszylindern aufnehmen. Dieses Druckmittel gelangt dann über die mit den Speicherbehältern oder -kammern verbundene Rückförderpumpe in die Verbindungsleitung zwischen Hauptbremszylinder und den Radbremszylindern, wobei der Anschluß üblicherweise vom Hauptbremszylinder aus gesehen vor den ABS-Regelventilen liegt.

Um auf der Basis dieses bekannten separaten ABS 2 eine Anfahrschlupfregelung zu realisieren, ist entsprechend der GB-PS 2 119 883 ein zusätzlicher Druckspeicher vorgesehen, der im Falle einer Anfahrschlupfregelung-Funktion über ein 3/2-Wegeventil mit der zu den Radbremszylindern führenden Druckleitung verbunden wird. Je nach Ansteuerung der ABS-Regelventile für die zu realisierende ASR-Funktion gelangt dann der in diesem Druckspeicher vorhandene Druck des Druckmittels zu dem jeweiligen, selektiv im Sinne einer Sperrdifferentialwirkung anzusteuernden Radbremszylinder der angetriebenen Achse, wobei die ABS-Regelventile für diesen Fall in einem insofern inversen Sinn angesteuert werden, was über eine entsprechend ausgebildete Steuerlogikschaltung für den kombinierten ABS/ASR-Fall erfolgen kann.

Um durch die Nutzung der Komponenten des Antiblockierreglers eine kostengünstige, jedoch vollwertige Antriebsschlupfregelung zu gewinnen, sind zusätzlich zu dem Druckspeicher und dem diesen mit den Radbremszylindern verbindenden Magnetventil noch ein weiteres druckgesteuertes Umschaltventil, ein Überdruckventil und ein Druckschalter vorgesehen.

Die Pumpe ist als Saugpumpe ausgelegt und wird dann, wenn im Druckspeicher bei der Umschaltung des Magnetventils kein ausreichender Druck für die Realisierung von ASR-Funktionen vorhanden ist, entweder über den Druckschalter oder direkt vom elektronischen Steuergerät angesteuert, um Druckmittel in den Druckspeicher bzw. den angeschlossenen Bremskreis zu fördern. Das ergänzend noch vorgesehene druckgesteuerte Umschaltventil öffnet bei Erreichen eines vorgegebenen minimalen Drucks am Ausgang einer Förderpumpen-Speicherkammer, läßt so Druckmittel vom Hauptbremszylinder zur Speicherkammer fließen und sorgt für Nachschub. Schließlich dient das noch vorgesehene Rückschlagventil dann dafür, daß der Druck zwischen dem bei der Realisierung von ASR-Funktionen umschaltenden Magnetventil und den ABS-Ventilen im Bereich der Radbremsen nicht zu hoch wird.

Auch aus der US-PS 4 416 347 ist es bekannt, ABS-Komponenten zur Anfahrschlupfregelung oder als Berganfahrhilfe einzusetzen, bei entsprechender "inverser" Ansteuerung der ABS-Regelventile und Modifikation weiterer vorhandener Komponenten, wobei allerdings bei sehr starkem Durchdrehen beider angetriebener Räder ergänzende Mittel vorgesehen sind, die die Ausgangsleistung der Antriebsmaschine reduzieren, indem auf die mechanische Verbindung zwischen dem Gaspedal und der Drosselklappe im Ansaugrohr der Brennkraftmaschine Einfluß genommen wird. Dies kann mit Hilfe eines elektromagnetisch angesteuerten 3/2-Wegeventils geschehen.

Bei einer weiteren kombinierten Einrichtung zur Realisierung von ABS- und-unter Verwendung der gleichen Komponenten-auch ASR-Funktionen ist dem ABS-System ein zusätzlicher Druckspeicher zugeordnet, der der Bremsdruckversorgung im Falle des Auftretens von ASR-Funktionen dient. Dieser Druckspeicher kann mit Hilfe der Rückförderpumpe des Antiblockiersystems ventilgesteuert aufgeladen werden, wobei die Rückförderpumpe während der Druckabbau-Phasen der Antriebsschlupfregelung in den Druckspeicher arbeitet. Außerhalb solcher Regelphasen, also bei Normalbetrieb, kann der Druckspeicher entweder durch Betätigung der Fahrzeugbremse oder durch selbsttätige Aktivierung eines Ladekreises unter Mitwirkung der Rückförderpumpe wieder aufgeladen werden, wenn das Fahrzeug steht oder sich in einem nichtgebremsten Fahrzustand befindet (DE-OS 31 37 287).

Auch hier genauso wie bei den weiter vorn schon erwähnten kombinierten Systemen sind zusätzliche Komponenten in Hardware-Ausführung erforderlich, mindestens jeweils ein weiterer Druckspeicher und diesen mit den anderen Komponenten verbindende Hydraulikleitungen, wobei der erforderliche Druck für die Realisierung von ASR-Funktionen stets aus diesem zusätzlichen Druckspeicher resultiert.

Durch das Dokument DE-A-3 507 330 ist eine hydraulische Bremsanlage bekannt mit einer Anfahrhilfe, die an einen Hauptbremszylinder angeschlossen ist und auf Vorderradbremsen wirkt. Die Anfahrhilfe enthält ein elektromagnetisch steuerbares Ventil, das normalerweise offen ist und Bremsdruck aus dem Hauptbremszylinder zu den Vorderradbremsen leitet, ein Rückschlagventil im Bypaß zu dem elektromagnetisch steuerbaren Ventil, wobei das Rückschlagventil mit Druck aus dem Hauptbremszylinder in Richtung zu den Vorderradbremsen öffenbar ist, ein Überlastventil, das mittels Druck aus den Vorderradbremsen zum Hauptbremszylinder hin öffenbar ist, einen Neigungsschalter und einen Kupplungspedalschalter, wobei beide Schalter in Reihe geschaltet sind, so daß nur dann, wenn beide Schalter Kontakt geben, das elektromagnetisch steuerbare Ventil schließbar ist. Ist beispielsweise der Hauptbremszylinder betätigt und der Neigungsschalter infolge Neigung des Fahrzeugs geschlossen, so wird infolge einer Kupplungspedalbetätigung das elektromagnetisch steuerbare Ventil geschlossen und Bremsdruck in den Vorderradbremsen eingesperrt. Läßt man dann das Bremspedal los, so bleibt das Fahrzeug gebremst. Läßt man das Kupplungspedal los, dann öffnet der Kupplungspedalschalter und somit auch das elektromagnetisch steuerbare Ventil, so daß der eingesperrte Bremsdruck verschwindet. Diese hydraulische Fahrzeugbremsanlage besitzt kein Antiblockiersystem und kein auf ein Antiblockiersystem aufgebautes Anfahrschlupfregelsystem.

Der vorliegenden Erfindung liegt die Aufgabe zugrunde, ausgehend von einem Antiblockiersystem des Typs ABS 2 und auf dessen Basis dieses mit geringsten Zusatzmitteln so auszugestalten, daß unter Einbeziehung des Fahrers und entsprechender, problemlos in das jeweilige Steuergerät (Rechner) einzubringender Software eine wirksame Anfahrschlupfregelung bzw. Berganfahrhilfe realisiert werden kann, deren Druckhöhe unabhängig von der Funktion der beim Typ ABS 2 stets vorgesehenen Speicherkammer ist.

### Vorteile der Erfindung

Die Erfindung löst diese Aufgabe mit den kennzeichnenden Merkmalen des Hauptanspruchs bzw. des Anspruchs 4 und hat den Vorteil, daß eine zusätzliche Energieversorgung entbehrlich ist und dennoch mit ganz geringem Zusatzaufwand eine wirksame Bremsdruckerzeugung am durchdrehenden Rad im Sinne einer Sperrdifferentialwirkung möglich ist zur Realisierung von ASR-Funktionen.

An zusätzlichem Hardware-Aufwand wird lediglich ein ASR-Umschaltventil, bevorzugt in der 3/2-Wege-Version benötigt, ferner zur Vervollständigung in vorteilhafter Ausgestaltung noch zwei Rückschlagventile, von denen ein Ventil ein Überdruckrückschlagventil ist. Die Erfindung setzt die ohnehin vorhandenen Grundkomponenten eines Antiblockiersystems entsprechend dem Typ ABS 2 ein, also die dort vorhandene Rückförderpumpe, sowie den als ABS-Komponente vorhandenen Druckspeicher, wobei jedoch nicht der von diesem Speicher möglicherweise erzeugte und insofern auch begrenzte Druck ausgewertet wird, sondern aus dem Speicher von der Rückförderpumpe Druckmittel entnommen wird zur Erzeugung der gewünschten selektiven Bremsdruckwirkung im ASR-Fall.

Vorteilhaft ist ferner, daß die Erfindung ausdrücklich den Benutzer des Fahrzeugs in die Realisierung der ASR-Funktionen einbezieht, so daß diese auch nur dann realisierbar sind, wenn der Fahrer dies für wünschenswert hält. Der normale Bremsfall sowie die Realisierung der ABS-Funktionen im gegebenen Fall können ungestört von den erweiterten Möglichkeiten der ASR-Funktionen durchgeführt werden.

Durch die in den Unteransprüchen aufgeführten Maßnahmen sind vorteilhafte Weiterbildungen und Verbesserungen der Erfindung möglich. So ist parallel zum vorgesehenen ASR-Umschaltventil ein Rückschlagventil in Richtung Radbremse geschaltet, um auch während der Realisierung von ASR-Funktionen, während welcher das Umschaltventil angesteuert ist, eine Bremsbetätigung zu ermöglichen.

### Zeichnung

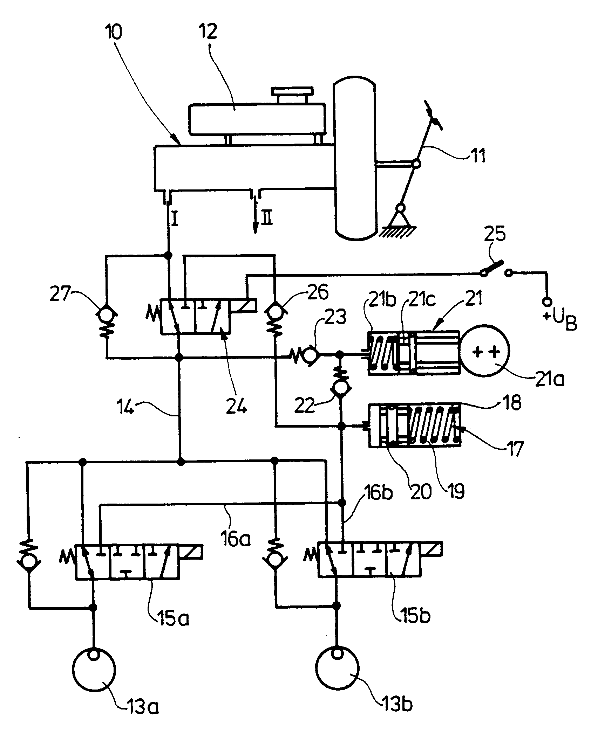

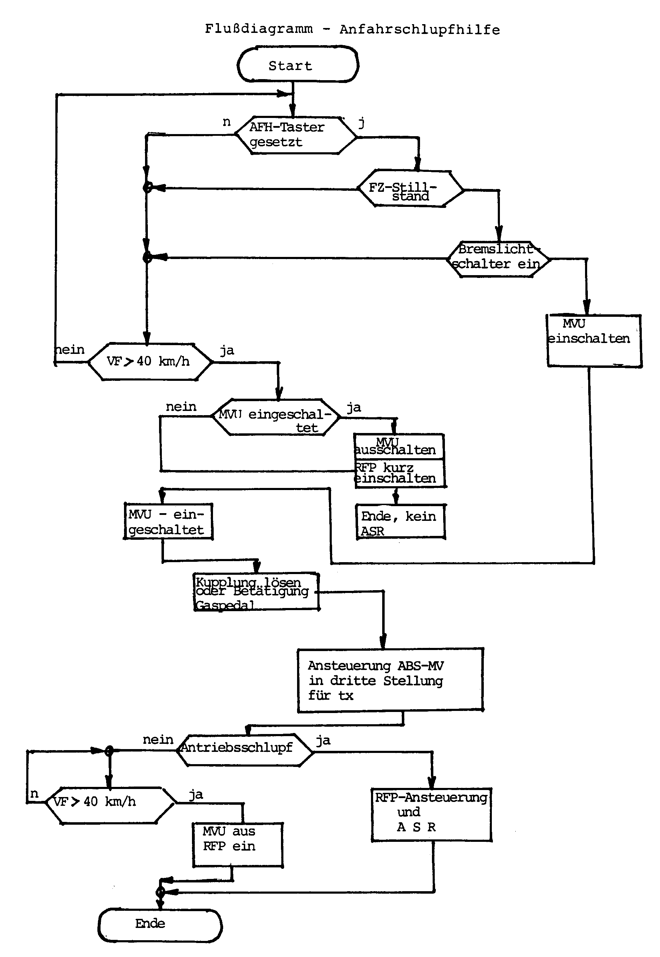

Ein Ausführungsbeispiel der Erfindung ist in der Zeichnung dargestellt und wird in der nachfolgenden Beschreibung näher erläutert. Die Zeichnung zeigt schematisiert und lediglich im Ausschnitt eine Fahrzeugbremsanlage mit Hauptbremszylinder und einigen ABS-Komponenten sowie einigen weiteren, die Erfindung ermöglichenden Modifikationen.

### Beschreibung der Ausführungsbeispiele

Zunächst wird darauf hingewiesen, daß die Zeichnung lediglich die für die Erfindung erforderlichen Hardware-Komponenten darstellt, wobei für die Ansteuerung der vorhandenen elektromagnetischen ASR-Umschalt- und ABS-Regelventile eine in der Zeichnung nicht dargestellte elektronische Steuerschaltung, bevorzugt in Form eines programmgesteuerten Rechners vorgesehen ist, die aufgrund der ihr zugeführten Ausgangssignale von Radsensoren und gegebenenfalls weiteren Informationen die erforderlichen Ansteuerungen und Umschaltungen vornimmt. Solche Steuerschaltungen sind für normale Bremsanlagen unter Einschluß zugeordneter ABS-Komponenten bekannt, so daß auf diese nicht genauer eingegangen zu werden braucht - auch in der erweiterten Auslegung für ASR-Betrieb.

In der Zeichnung ist der Hauptbremszylinder der Bremsanlage mit 10 bezeichnet; er umfaßt die Bremspedalbetätigung 11 und einen Vorratsbehälter 12 für das Druckmittel; im vorliegenden Fall sind zwei getrennte Bremskreise I und II vorgesehen, die entweder zu den Rädern jeweils einer Achse führen oder auch bei diagonaler Bremskreisaufteilung jeweils ein vorderes und ein hinteres gegenüberliegendes Rad beaufschlagen.

Es sei angenommen, daß bei dem dargestellten Ausführungsbeispiel der im einzelnen dargestellte Bremskreis I in seiner verschiedenen Aufteilung mit den Radbremszylindern 13a, 13b der Räder der angetriebenen Achse verbunden ist, wobei in bekannter Weise die ABS-Funktionen Druckaufbau, Druckhalten und Druckabsenken realisierenden Mehrwege-Regelventile 15a, 15b (3/3-Ventile) in eine vom Hauptbremszylinder 10 kommende Druckleitung zwischen diesem und den Radbremszylindern 13a, 13b geschaltet sind.

Zur Aufnahme überschüssigen Druckmittels in der ABS-Funktion "Druckabsenken" ist der jeweilige Ventilanschluß 16a, 16b mit der Speicherkammer 17 verbunden, die in einem zylinderförmigen Gehäuse 18 einen von einer Feder 19 vorgespannten Kolben 20 enthält. Zur Rückführung des von der Speicherkammer aufgenommenen Druckmittels in den Bremskreislauf ist eine Rückförderpumpe 21 mit der Kurzbezeichnung RFP über ein Pumpeneinlaßventil 22 mit der Speicherkammer 17 und über ein Pumpenauslaßventil 23 mit der Hauptverbindungsleitung 14 zwischen dem Hauptbremszylinder 10 und den Radbremszylindern verbunden.

Um auf der Basis einer solchen Bremsanlage mit Antiblockiersystem vom ABS 2 Typ entsprechend vorliegender Erfindung eine Anfahrschlupfregelung bzw. Berganfahrhilfe realisieren zu können, ist als einzige zusätzliche Hardware-Komponente ein magnetisches ASR-Umschaltventil 24 mit der Kurzbezeichnung MVU (auf diese Kurzbezeichnung wird bei der Erläuterung verwiesen, damit ein später noch angegebenes Flußdiagramm leichter interpretiert werden kann) in den Bremskreis I der angetriebenen Achse vor den ABS-Mehrwege-Regelventilen 15a, 15b installiert. Bevorzugt ist das ASR-Umschaltventil 24 ein 3/2-Wegeventil; der Anschluß der Pumpenauslaßseite der Rückförderpumpe 21 liegt dabei zwischen diesem magnetischen ASR-Umschaltventil 24 und den 3/3-Wege-Regelventilen für die Realisierung der ABS-Funktionen. Der Aufbau der Rückförderpumpe 21 kann so getroffen sein, daß diese, wie in der Zeichnung schematisiert angedeutet, einen von einem Exzenter 21a angetriebenen, von einer Feder 21b vorgespannten Kolben 21c aufweist.

Um jetzt eine Anfahrschlupfregelung oder eine Berganfahrhilfe zu erreichen, betätigt der Fahrer des mit einer solchen modifizierten Bremsanlage ausgestatteten Fahrzeugs bei Fahrzeugstillstand zunächst die Bremse und veranlaßt ferner durch manuelle Betätigung eines Schalters 25 die Umschaltung des ASR-Umschaltventils 24 für die Realisierung von ASR-Funktionen.

Wird vom Fahrer nunmehr die Bremse gelöst, dann bleibt durch das in seine andere Position umgeschaltete ASR-Umschaltventil 24 der zuvor vom Fahrer aufgebrachte Bremsdruck in den Radbremszylindern 13a, 13b der Antriebsachse eingespeist. Signale bzw. der Zeitpunkt zum Anfahren können durch die Auswertung von ohnehin vorhandenen Sensoren ermittelt werden, beispielsweise Lösen der Kupplung (bei Schaltgetriebe), entsprechende Signale bei einem vorhandenen Automatikgetriebe oder Betätigung des Gaspedals unter Berücksichtigung und Auswertung einer minimalen Motordrehzahl; daraufhin erfolgt zunächst eine Ansteuerung der hier als 3/3-Wegeventile ausgebildeten ABS-Regelventile 15a, 15b in die dritte Position, in welcher der eingespeiste und insoweit aufrechterhaltene Bremsdruck in die Speicherkammer 17 entlastet wird.

Der weitere Verlauf ist dann wie folgt. Setzt sich das Fahrzeug ohne Antriebsschlupf von unzulässiger Größe in Bewegung - erfaßt durch die ohnehin vorhandenen ABS-Radsensoren -, so wird bei Erreichen einer bestimmten Geschwindigkeit, die beispielsweise bei 40 km/h liegen kann, das ASR-Umschaltventil 24 entregt und durch kurze Ansteuerung des Rückförderpumpenmotors das in die Speicherkammer 17 entlastete Druckmittelvolumen in den Hauptbremszylinder 10 zurückgefördert.

Wird andererseits beim Anfahren auf unzulässig hohen Antriebsschlupf an einem Rad erkannt, dann wird, bei nunmehr wieder in die die Normalverbindung zwischen Hauptbremszylinder und den Radbremszylindern gewährleistender erster Stellung der ABS-Regelventile, wobei allerdings die Verbindung zum Hauptbremszylinder durch die Position des ASR-Umschaltventils unterbrochen bleibt, durch sofortige Ansteuerung der Rückförderpumpe Bremsdruck erzeugt, der, wie erwähnt, in Richtung auf den Hauptbremszylinder 10 durch das erregte ASR-Umschaltventil 24 abgesperrt wird und nunmehr durch die entsprechend zur Realisierung von ASR-Funktionen angesteuerten ABS-Regelventilen 15a bzw. 15b im Radbremszylinder des durchdrehenden Rades in der hierfür erforderlichen Weise moduliert wird.

Es empfiehlt sich, den Regelalgorithmus im ABS/ASR-Steuergerät so auszubilden, daß in der Hauptsache nur jeweils ein Antriebsrad abgebremst wird mit dem Ziel der Synchronisation der Radgeschwindigkeiten der Antriebsräder im Sinne der Darstellung einer Sperrdifferentialwirkung.

Drehen unter besonderen Umständen beide Antriebsräder durch, dann liegt insgesamt ein zu hohes Motorantriebsmoment vor und man kann dann in bekannter Weise durch eine Motormomentregelung, z. B. mittels Beeinflussung der Drosselklappe, automatisch eingreifen und die von der Brennkraftmaschine ausgehende Antriebskraft reduzieren oder gegebenenfalls, unter Einbeziehung des Fahrers, diesem diesen Zustand durch ein optisches/akustisches Signal anzeigen, so daß vom Fahrer selbst die Gaspedalstellung reduziert werden kann.

Da die Rückförderpumpe 21 bestrebt ist, das gesamte in der Speicherkammer 17 vorher eingebrachte Volumen herauszufördern, der Bedarf zur Abbremsung eines durchdrehenden Rades unter Umständen jedoch geringer ist, kann in vorteilhafter Weise zur Vermeidung eines unerwünschten Überdrucks eine entsprechende Überdruckentlastung realisiert werden, indem ein Überdruck-Rückschlagventil 26 vorgesehen und so geschaltet ist, daß in der erregten bzw. angesteuerten Position des ASR-Umschaltventils 24 die Ausgangsseite der Rückförderpumpe 21 mit der Speicherkammer 17 verbunden ist. Dadurch wird einerseits, je nach Auslegung des Überdruck-Rückschlagventils 26 der maximal von der Rückförderpumpe 21 erzeugbare Druck begrenzt, andererseits bleibt hierdurch das ursprünglich eingesperrte Volumen des Druckmittels im steten Umlauf und kann nach Bedarf für die Bremsdruckmodulation abgerufen werden.

Es ist angebracht, die Anfahrschlupfregelung ASR nur in einem begrenzten Geschwindigkeitsbereich (beispielsweise bis maximal 40 km/h) einsetzen zu lassen. Bei Überschreiten einer entsprechend vorgegebenen Geschwindigkeitsgrenze erfolgt die Volumenrückführung in den Hauptbremszylinder 10 wie zuvor beschrieben durch Ansteuerung der Rückförderpumpe 21 nach Rückschaltung des ASR-Umschatventils 24.

Damit auch bei angesteuertem ASR-Umschaltventil 24 eine Bremsbetätigung jederzeit möglich ist, ist schließlich noch parallel zum ASR-Umschaltventil 24 ein Einwege- bzw. Rückschlagventil 27 in Richtung Radbremse geschaltet. Das in der Zeichnung dargestellte erfindungsgemäße Ausführungsbeispiel zeigt einen hydraulischen Funktionsschaltplan für eine Vorder- oder Hinterradbremskreisaufteilung; bei diagonaler Aufteilung sind sinngemäß zwei ASR-Umschaltventile, Rückschlagventile und Überdruck-Rückschlagventile erforderlich.

Das im nachfolgenden noch angegebene Flußdiagramm für die programmgesteuerte Realisierung der Anfahrschlupfregelung bzw. (Berg)Anfahrhilfe zeigt die vom nichtdargestellten Steuergerät bzw. dem entsprechenden Rechner durchzuführenden Funktionen an, wie sie weiter vorn schon erläutert sind. Hierbei versteht es sich, daß die Erfindung bevorzugt als Teil eines programmgesteuerten Systems auf der Seite des elektronischen ABS/ASR-Steuergeräts realisiert ist, wobei die ASR-Funktionen beispielsweise aufgerufen werden können mit Betätigung des Schalters oder AFH-Tasters 25, also bei Umschalten des ASR-Umschaltventils 24 in die zweite, in der Zeichnung dargestellte Position.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahren zur Anfahrschlupfregelung (ASR) und/oder (Berg)Anfahrhilfe, wobei im Sinne einer Sperrdifferentialwirkung auf die angetriebenen Räder eines Kraftfahrzeus durch Einbeziehung und Ausnutzung von zu einem Antiblockiersystem (ABS) gehörenden Komponenten, die zwischen Radbremszylindern (13a, 13b) und einem Hauptbremszylinder (HBZ, 10) geschaltete ABS-Mehrwege-Regelventile (15a, 15b), eine Speicherkammer (17) für die Aufnahme von durch eine ABS-Wirkung entlasteten Druckmittelvolumen und eine Rückförderpumpe (RFP, 21) für das Rückfördern von in der Speicherkammer (17) enthaltenem Druckmittel zum Hauptbremszylinder (10) einschließen, eine selektive Bremswirkung ausgeübt wird, dadurch gekennzeichnet, daß
a) zur Inanspruchnahme der Anfahrschlupfregelung oder der (Berg)Anfahrhilfe der Fahrer zunächst vor Ingangsetzen des Fahrzeugs durch Betätigung der Bremse Bremsdruck über die geöffneten ABS-Mehrwege-Regelventile (15a, 15b) zu den Radbremszylindern (13a, 13b) der Antriebsachse einspeist, daß
b) vor dem Ende der Betätigung der Bremse durch manuelle Schalterbetätigung durch den Fahrer mittels eines zwischen Hauptbremszylinder (10) und dem (den) Radbremszylinder(n) vor die ABS-Regelventile (15a, 15b) geschalteten ASR-Umschaltventil (24) die Verbindung zum Hauptbremszylinder (10) zunächst unter Aufrechterhaltung des eingespeisten Bremsdrucks unterbrochen wird, daß
c) bei beabsichtigtem Anfahren die ABS-Regelventile (15a, 15b) zur Entlastung des Bremsdrucks in die Speicherkammer (17) angesteuert werden und daß anschließend
d) bei Erkennen eines einen vorgegebenen Wert überschreitenden Antriebsschlupfs an einem Rad die Rückförderpumpe (21) zur Erzeugung von Bremsdruck sowie die mit diesem beaufschlagten ABS-Regelventile (15a, 15b) zur ASR-Bremsdruckmodulation selektiv angesteuert werden und daß
e) ein stetiger Druckmittelumlauf und gleichzeitige Druckkonstanthaltung im ASR-Fall erzeugt werden, in dem die gegenüber dem Hauptbremszylinder (10) abgeschlossene Hauptbremsleitung (14), in die die Rückförderpumpe (21) Druckmittel einspeist, über das ASR-Umschaltventil (24) und ein Überdruck-Rückschlagventil (26) mit der Speicherkammer (17) verbunden wird.

2. Verfahren nach Anspruch 1, dadurch gekennzeichnet, daß bei Überschreiten einer vorgegebenen Fahrzeug-Geschwindigkeitsschwelle (v_{F} > 40 km/h) das ASR-Magnetventil (24) ausgeschaltet und durch Ansteuerung der Rückförderpumpe (21) in der Speicherkammer (17) enthaltenes Druckmittelvolumen zum Hauptbremszylinder rückgefördert wird.

3. Verfahren nach Anspruch 1 oder 2, dadurch gekennzeichnet, daß zur Erfassung des Anfahrvorgangs des Kraftfahrzeugs die Kupplungsposition und/oder eine Gaspedalbetätigung erfaßt und ausgewertet wird, wobei entsprechende Signale zur Ansteuerung der ABS-Regelventile (15a, 15b) zur Umschaltung in die dritte mit der Speicherkammer (17) verbundene Entlastungsposition führen.

4. Vorrichtung zur Anfahrschlupfregelung (ASR) und/oder (Berg)Anfahrhilfe, wobei im Sinne einer Sperrdifferentialwirkung auf die angetriebenen Räder eines Kraftfahrzeugs unter Einbeziehung und Ausnutzung von zu einem Antiblockiersystem (ABS) gehörenden Komponenten, die zwischen Radbremszylindern (13a, 13b) und einem Hauptbremszylinder (HBZ, 10) geschaltete ABS-Mehrwege-Regelventile (15a, 15b), eine Speicherkammer (17) für die Aufnahme von durch eine ABS-Wirkung entlasteten Druckmittelvolumen, eine Rückförderpumpe (RFP, 21) für das Rückfördern von in der Speicherkammer (17) enthaltenem Druckmittel zum Hauptbremszylinder (10) einschließen, eine selektive Bremswirkung ausgeübt wird, dadurch gekennzeichnet, daß
a) für die Inanspruchnahme der Anfahrschlupfregelung oder der (Berg)Anfahrhilfe bei Betätigung der Bremse die ABS-Mehrwege-Regelventile (15a, 15b) von dem Hauptbremszylinder (10) zu den Radbremszylindern (13a, 13b) der Antriebsachse hin geöffnet sind, daß
b) ein manuell betätigbarer Schalter (25) und ein durch diesen steuerbares ASR-Umschaltventil (24) vorgesehen sind, wobei das ASR-Umschaltventil (24) zwischen dem Hauptbremszylinder (10) und dem (den) Radbremszylinder(n) vor die ABS-Mehrwege-Regelventile (15a,15b) geschaltet ist zunächst zur Unterbrechung der Verbindung der ABS-Mehrwege-Regelventile (15a, 15b) zum Hauptbremszylinder (10), daß
c) Mittel vorgesehen sind, die bei beabsichtigtem Anfahren die ABS-Regelventile (15a, 15b) ansteuern zum Verwenden der Radbremszylinder (13a, 13b) mit der Speicherkammer (17), daß anschließend
d) Mittel, die einen einen vorgegebenen Wert überschreitenden Antriebsschlupf an einem Rad erkennen, die Rückförderpumpe (21) zur Erzeugung von Bremsdruck sowie die mit diesem beaufschlagten ABS-Regelventile (15a, 15b) zur ASR-Bremsdruckmodulation selektiv ansteuern und daß
e) im ASR-Fall die gegenüber dem Hauptbremszylinder (10) abgeschlossene Hauptbremsleitung (14) mit der Rückförderpumpe (21) verbunden ist über das umgeschaltete ASR-Umschaltventil (24) und ein an dieses angeschlossenes Überdruck-Rückschlagventil (26), das mit der Speicherkammer (17) verbunden ist.

5. Vorrichtung nach Anspruch 4, dadurch gekennzeichnet, daß parallel zum ASR-Umschaltventil (24) ein in Richtung Radbremszylinder öffnendes Rückschlagventil (27) angeordnet ist.

## Claims

1. Method for controlling skidding when starting (ASR) and/or low-speed traction control system (for hill starts), a selective braking effect being exerted in order to bring about a locking differential effect on the driven wheels of a motor vehicle, by involving and utilizing components which are part of an anti-lock brake system (ABS) and include ABS multiway control valves (15a, 15b) connected between wheel brake cylinders (13a, 13b) and a master brake cylinder (HBZ, 10), a storage chamber (17) for receiving volumes of pressure medium which are relieved by means of an ABS effect and a return pump (RFP, 21) for feeding back pressure medium contained in the storage chamber (17) to the master brake cylinder (10), characterized in that
a) in order to trigger the control of skidding when starting or the low-speed traction control system (for hill starts), the driver initially feeds braking pressure via the opened ABS multiway control valves (15a, 15b) to the wheel brake cylinders (13a, 13b) of the drive axle by activating the brake before actuating the vehicle, in that
b) the connection to the master brake cylinder (10) is interrupted, initially with the fed-in braking pressure being maintained, before the end of the activation of the brake by manual switch activation by the driver by means of an ASR switchover valve (24) connected between the master brake cylinder (10) and the wheel brake cylinder(s) upstream of the ABS control valves (15a, 15b), in that
c) in the case of intentional starting, the ABS control valves (15a, 15b) are actuated in order to relieve the braking pressure into the storage chamber (17), and in that, subsequently,
d) when a drive slip, which exceeds a prescribed value, at a wheel is detected the return pump (21) is selectively actuated in order to produce braking pressure and the ABS control valves (15a, 15b), to which the said braking pressure is applied, are selectively actuated, for the purpose of ASR braking pressure modulation, and in that
e) in the case of ASR operation, a continuous circulation of pressure medium is brought about and the pressure is simultaneously kept constant in that the main brake line (14) which is sealed off from the master brake cylinder (10), and into which the return pump (21) feeds pressure medium, is connected to the storage chamber (17) via the ASR switchover valve (24) and an overpressure nonreturn valve (26).

2. Method according to Claim 1, characterized in that when a prescribed vehicle speed threshold (v_{F} > 40 km/h) is exceeded, the ASR solenoid valve (24) is switched off and any volume of pressure medium contained in the storage chamber (17) is returned to the master brake cylinder by actuating the return pump (21).

3. Method according to Claim 1 or 2, characterized in that, in order to detect the starting process of the motor vehicle, the clutch position and/or activation of the accelerator pedal is detected and evaluated, corresponding signals for the actuation of the ABS control valves (15a, 15b) leading to the third relief position which is connected to the storage chamber (17) being switched over to.

4. Device for controlling skidding when starting (ASR) and/or low-speed traction control system (for hill starts), a selective braking effect being exerted in order to bring about a locking differential effect on the driven wheels of a motor vehicle, by involving and utilizing components which are part of an anti-lock brake system (ABS) and include ABS multiway control valves (15a, 15b) connected between wheel brake cylinders (13a, 13b) and a master brake cylinder (HBZ, 10), a storage chamber (17) for receiving a volume of pressure medium which is relieved by means of an ABS effect, a return pump (RFP, 21) for feeding back pressure medium contained in the storage chamber (17) to the master brake cylinder (10), characterized in that
a) in order to trigger the control of skidding when starting or the low-speed traction control system (for hill starts), when the brakes are activated the ABS multiway control valves (15a, 15b) are opened from the master brake cylinder (10) to the wheel brake cylinders (13a, 13b) of the drive axle, in that
b) a switch (25) which can be activated manually and an ASR switchover valve (24) which can be controlled by the latter are provided, the ASR switchover valve (24) being connected between the master brake cylinder (10) and the wheel brake cylinder(s) upstream of the ABS multiway control valves (15a, 15b), initially to interrupt the connection of the ABS multiway control valves (15a, 15b) to the master brake cylinder (10), in that
c) means are provided which, in the case of intentional starting, actuate the ABS control valves (15a, 15b) in order to connect the wheel brake cylinders (13a, 13b) to the storage chamber (17), in that, subsequently,
d) means which detect a drive slip, exceeding a prescribed value, at a wheel selectively actuate the return pump (21) in order to produce braking pressure and selectively actuate the ABS control valves (15a, 15b), to which the said braking pressure is applied, for the purpose of ASR braking pressure modulation, and in that
e) in the case of ASR operation, the main brake line (14) which is sealed off from the master brake cylinder (10) is connected to the return pump (21) via the switched-over ASR switchover valve (24) and an overpressure nonreturn valve (26) which is connected thereto and is connected to the storage chamber (17).

5. Device according to Claim 4, characterized in that a nonreturn valve (27) which opens in the direction of the wheel brake cylinder is arranged parallel to the ASR switchover valve (24).

## Revendications

1. Procédé de régulation antipatinage au démarrage ASR et/ou d'assistance au démarrage en côte, procédé selon lequel, dans le sens d'un effet de blocage différentiel sur les roues motrices d'un véhicule automobile, en intégrant et en utilisant les composants d'un système anti-blocage ABS, comprenant les électrovannes de régulation à plusieurs voies ABS (15a, 15b) branchées entre les cylindres de frein de roue (13a, 13b) et un maître-cylindre (HBZ 10), une chambre d'accumulation (17) pour recevoir le volume de liquide sous pression déchargé par effet ABS et une pompe de refoulement (RFP 21) pour refouler le liquide sous pression contenu dans la chambre d'accumulation (17) vers le maître cylindre (10), on exerce un effet de freinage sélectif,
caractérisé en ce que,
a) pour mettre en oeuvre la régulation antipatinage au démarrage et/ou l'assistance au démarrage en côte, le conducteur, tout d'abord, avant de mettre en route le véhicule, en actionnant les freins, injecte la pression de frein par l'intermédiaire des électrovannes de régulation à plusieurs voies ABS (15a, 15b) ouvertes vers les cylindres de freins de roues (13a, 13b) de l'essieu moteur,
b) avant la fin de l'actionnement des freins, par une commande manuelle d'un commutateur par le conducteur, à l'aide d'une électrovanne de commutation ASR (24) branchée entre le maître-cylindre (1) et le ou les cylindres de frein de roue en amont des électrovannes de régulation ABS (15a, 15b), on interrompt la liaison vers le maître-cylindre (10), tout d'abord en maintenant la pression de frein injectée,
c) lors d'un démarrage intentionnel, on commande les électrovannes de régulation ABS (15a, 15b) pour décharger la pression de frein dans la chambre d'accumulation (17) puis,
d) en détectant un patinage à l'entraînement dépassant une valeur prédéterminée sur une roue, on commande la pompe de refoulement (21) pour créer la pression de frein ainsi que les électrovannes de régulation ABS (15a, 15b) ainsi sollicitées pour la modulation de pression de frein ASR, par une commande sélective et,
e) on réalise une circulation continue de liquide sous pression et en même temps on maintient la pression constante dans le cas ASR en ce que on injecte du liquide sous pression dans la conduite principale de frein (14) coupée par le maître-cylindre (10), par la pompe de refoulement (21), à travers l'électrovanne de commutation ASR (24) et une soupape anti-retour de surpression (26) reliée à la chambre d'accumulation (17).

2. Procédé selon la revendication 1, caractérisé en ce qu'en cas de dépassement d'un seuil de vitesse prédéterminé du véhicule (v_{F} > 40 km/h) l'électrovanne ASR (24) est coupée et le volume de fluide sous pression contenu dans la chambre d'accumulation (17) est transféré en retour par la pompe de refoulement (21) dans le maître-cylindre.

3. Procédé selon la revendication 1 ou 2, caractérisé en ce que pour détecter la phase de démarrage du véhicule on détecte et on exploite la position de l'embrayage et/ou la commande de la pédale d'accélérateur, des signaux correspondants étant transmis à la commande des électrovannes de régulation ABS (15a, 15b) pour commuter dans la troisième position de décharge reliée à la chambre d'accumulation (17).

4. Dispositif de régulation de patinage au démarrage ASR et/ou d'assistance au démarrage en côte, selon lequel, dans le sens d'un effet de blocage différentiel des roues motrices d'un véhicule automobile en intégrant et en utilisant les composants faisant partie d'un système anti-blocage ABS, les électrovannes de régulation à plusieurs voies ABS (15a, 15b) branchées entre les cylindres de frein de roue (13a, 13b) et un maître-cylindre (HBZ 10), une chambre d'accumulation (17) pour recevoir le volume de liquide sous pression déchargé par un effet ABS, une pompe de refoulement (RFP 21) pour refouler le liquide de pression contenu dans la chambre d'accumulation (17) vers le maître-cylindre (10), on exerce un effet de freinage sélectif,
caractérisé en ce que,
a) pour la mise en oeuvre de la régulation de patinage au démarrage ou l'assistance au démarrage en côte, par actionnement du frein, on ouvre les soupapes de régulation à plusieurs voies ABS (15a, 15b) du maître cylindre (10) vers les cylindres de freins de roues (13a, 13b) de l'essieu moteur,
b) on utilise un commutateur à commande manuelle (25) et une soupape de commutation ASR (24) commandée par ce commutateur, la soupape de commutation ASR (24) étant prévue entre le maître cylindre (10) et le ou les cylindres de frein de roue en amont des soupapes de régulation à plusieurs voies ABS (15a, 15b), tout d'abord pour couper la liaison des électrovannes de régulation à plusieurs voies ABS (15a, 15b) vers le maître cylindre de frein (10),
c) des moyens sont prévus qui, en cas de démarrage intentionnel, commandent les soupapes de régulation ABS (15a, 15b) pour utiliser les cylindres de frein (13a, 13b) avec la chambre d'accumulation (17),
d) puis des moyens qui reconnaissent un patinage au démarrage sur une roue, et qui dépassent une valeur prédéterminée, commandent la pompe de refoulement (21) pour créer la pression de frein, ainsi que les soupapes de régulation ABS (15a, 15b) ainsi sollicitées pour la modulation de la pression ASR, par une commande sélective, et,
e) dans le cas ASR, la conduite principale de frein (14), coupée par rapport au maître-cylindre de frein (10), est reliée à la pompe de refoulement (21) par l'électrovanne de commutation ASR (24) commutée, et une soupape d'arrêt de surpression (26) reliée à l'électrovanne et qui communique avec la chambre d'accumulation (17).

5. Dispositif selon la revendication 4, caractérisé en ce qu'en parallèle à l'électrovanne de commutation ASR (24), il est prévu une soupape d'arrêt (27) qui s'ouvre en direction des cylindres de frein de roue.
